# DEMANDE DE BREVET EUROPEEN

(11) **EP 1 177 827 A1**
(43) Date de publication de la demande: **06.02.2002**
(21) Numéro de dépôt: 01402037.4
(22) Date de dépôt: 27.07.2001
(51) Int. Cl.: B01D 39/20, B01D 39/12, B01D 46/24

(54) **Module de filtration et filtre pour la retention de particules solides contenues dans un gaz**

(30) Priorité: 02.08.2000 FR 0010236
(71) Demandeur: Sprint Métal - Société de Production Internationale de Tréfiles, 92800 Puteaux (FR)
(72) Inventeur: Merlin, Jean-Yves, 76240 Belbeuf (FR)
(74) Mandataire: Lagrange, Jacques Etienne

(57) **Abrégé**

Module de filtration (29) pour la rétention de particules solides contenues dans un gaz chargé en particules solides caractérisé en ce qu'il comporte un élément filtrant volumique (30) et au moins un élément filtrant surfacique (31, 32). Filtre incorporant un tel module de filtration.

## Description

L'invention est relative à un module de filtration et à un filtre pour la rétention des particules solides contenues dans un gaz et notamment dans un gaz d'échappement d'un moteur à combustion interne diesel.

Les gaz d'échappement des moteurs à combustion interne diesel contiennent des particules solides de suie très polluantes qu'il est souhaitable d'éliminer. Pour cela, il a été proposé d'incorporer des filtres aux dispositifs d'échappement des moteurs diesels. Ces filtres devant résister à des températures très élevées (au moins 700°C) et aux vibrations engendrées par le fonctionnement du moteur. La résistance aux températures élevées est nécessaire non seulement du fait de la température des gaz d'échappement, mais aussi pour permettre une régénération du filtre par combustion des particules piégées lorsque le filtre est trop encrassé pour fonctionner de façon satisfaisante.

On a, par exemple, proposé d'utiliser des filtres en céramique à structure en nid d'abeille ou en carbure de silicium, mais ces filtres ont une résistance aux chocs thermiques insuffisante et se fissurent notamment lors des phases de régénération.

On a, également, proposé d'utiliser des filtres comportant des tampons métalliques constitués d'un mélange de fils fins tricotés et de fibres frittées qui résistent bien aux températures élevées, mais qui s'usent très rapidement.

Aucun de ces filtres ne donne satisfaction, soit par ce qu'ils sont trop coûteux pour être économiquement viables, soit par ce qu'ils conduisent à une durée de vie trop faible.

Pour remédier à ces inconvénients, on a proposé, notamment dans le brevet français 2 751 559, d'utiliser des tampons constitués d'un tricot de fils métalliques en acier inoxydable ou en alliage base nickel. Mais, les filtres ainsi obtenus, bien qu'ayant l'avantage d'engendrer une perte de charge relativement faible, présentent l'inconvénient d'avoir une efficacité de filtration insuffisante sauf à augmenter de façon inacceptable la dimension des filtres.

Le but de la présente invention est de remédier à cet inconvénient en proposant un filtre utilisable pour filtrer les gaz d'échappement d'un moteur diesel, ayant une efficacité de filtration importante tout en ayant une dimension acceptable.

A cet effet, l'invention a pour objet un module de filtration pour la rétention de particules solides contenues dans un gaz chargé en particules solides comportant un élément filtrant volumique et au moins un élément filtrant surfacique.

L'élément filtrant volumique est constitué, de préférence, d'au moins un tampon en tricot métallique qui peut comporter un dépôt catalytique et, éventuellement, un tampon en feutre métallique ou céramique disposé entre le tampon en tricot métallique et l'élément filtrant surfacique.

De préférence, l'au moins un élément filtrant surfacique est constitué d'une feuille ou d'une paroi en matériau métallique fritté et l'élément filtrant volumique peut être enserré entre deux éléments filtrants surfaciques.

Par exemple, le module de filtration peut constituer une plaque ou un tube cylindrique. L'élément filtrant volumique peut également être en forme de manchon cylindrique creux et l'élément filtrant surfacique peut constituer une paroi cylindrique entourant l'élément filtrant volumique.

L'invention concerne également un filtre pour la rétention de particules solides contenues dans un gaz, du type comprenant une conduite d'arrivée de gaz chargé en particules solides, une enceinte de filtration contenant au moins un module de filtration et une conduite d'évacuation du gaz épuré dans lequel l'au moins un module de filtration comporte un élément filtrant volumique disposé en amont par rapport au sens d'écoulement des gaz, et un élément filtrant surfacique disposé en aval par rapport au sens d'écoulement des gaz.

Le filtre selon l'invention peut comporter une pluralité de modules de filtration disposés parallèlement les uns aux autres de telle sorte que le gaz à épurer pénètre dans les modules de filtration par la tranche des modules de filtration et s'évacue par leurs surfaces.

Le filtre peut comporter un module de filtration en forme de manchon cylindrique et il peut comporter en outre en aval du module de filtration par rapport au sens de circulation des gaz un moyen pour engendrer une perte de charge du gaz entre le module de filtration et la conduite d'évacuation des gaz. Le moyen pour engendrer une perte de charge peut être constitué d'un espace libre et au moins une paroi en matériau métallique fritté en appui sur un support perméable au gaz tel qu'un tampon en tricot métallique disposé en aval de la paroi en matériau métallique fritté, et éventuellement un tampon en tricot métallique disposé contre la paroi en matériau métallique fritté en amont par rapport au sens de circulation du gaz.

Ce filtre peut être utilisé avantageusement pour épurer les gaz d'échappement d'un moteur diesel.

L'invention va maintenant être décrite de façon plus précise mais non limitative en regard des figures annexées.

La figure 1 représente un module de filtration plan dans lequel le gaz pénètre par la tranche.

La figure 2 représente un module de filtration cylindrique dans lequel le gaz pénètre par la tranche.

La figure 3 représente un module de filtration en forme de manchon cylindrique creux dans lequel le gaz pénètre par l'axe.

La figure 4 représente en coupe un filtre pour l'épuration des gaz d'échappement d'un moteur diesel.

La figure 5 représente en coupe un filtre pour l'épuration des gaz d'échappement d'un moteur diesel.

Un élément filtrant volumique est un élément filtrant dont l'efficacité est liée à la probabilité qu'une particule transportée par le gaz rencontre un obstacle constitué par le matériau du filtre. L'efficacité d'un tel élément filtrant est d'autant plus grande que le volume traversé par le gaz à filtrer est important. Pour obtenir une bonne efficacité de filtration avec un élément filtrant de ce type seul, il faut donc un grand volume.

Un élément filtrant surfacique est une plaque ou une paroi constituées d'un matériau poreux. Son efficacité est liée au diamètre des pores du matériau. Cependant, de tels élément filtrants se colmatent d'autant plus vite et engendrent des pertes de charge d'autant plus importantes que les surfaces sont faibles. En conséquence, utilisés seuls, de tels éléments filtrants doivent avoir une surface importante.

Les inventeurs ont constaté qu'en associant en série un élément filtrant volumique et un élément filtrant surfacique il est possible d'obtenir un module de filtration de taille modérée ayant une bonne efficacité et se colmatant lentement.

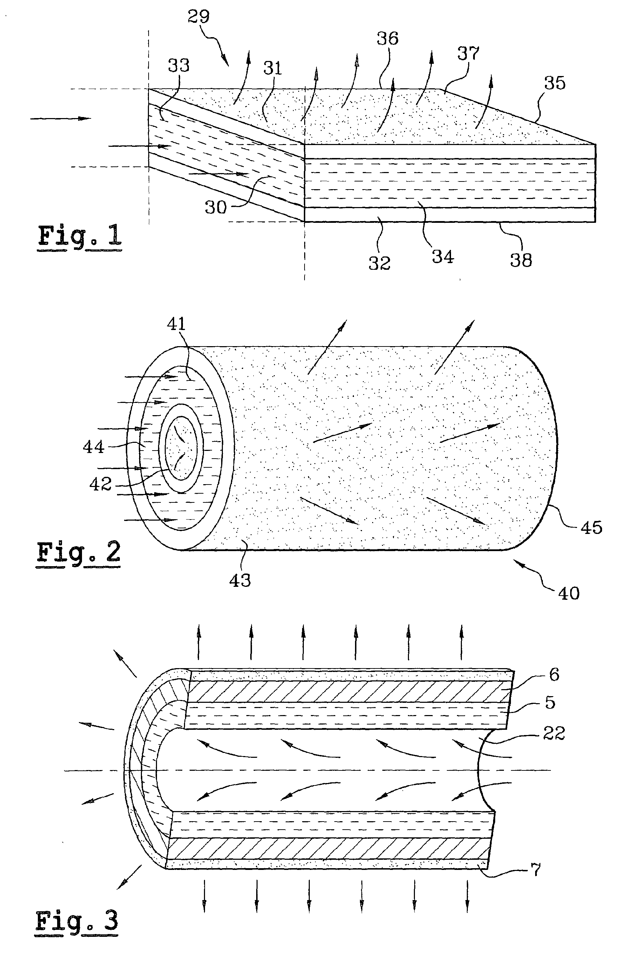

Dans un premier mode de réalisation représenté à la figure 1, le module de filtration 29 est une plaque rectangulaire composite constituée d'un tampon 30 en tricot métallique d'épaisseur comprise entre quelques mm et quelques centimètres, de référence de 2 mm à 50 mm, remplissant la fonction d'élément filtrant volumique, enserré entre deux plaques planes poreuses 31, 32 en matériau métallique fritté d'épaisseur comprise de préférence entre 0,2 mm et 3 mm remplissant la fonction d'élément filtrant surfacique.

A sa périphérie, le module de filtration 29 comporte quatre tranches 33, 34, 35 et 36. Lorsqu'un tel module de filtration est utilisé pour filtrer un gaz, trois tranches 34, 35 et 36 sont obstruées, le gaz pénètre à l'intérieur du module de filtration par la tranche 33, circule à travers le tampon 30 en tricot métallique puis traverse perpendiculairement les plaques 31 et 32 en matériau métallique fritté, comme l'indiquent les flèches. Le passage du gaz à travers le tampon 30 en tricot métallique assure un filtrage du type volumique et le passage du gaz à travers les plaques 31 et 32 assure un filtrage du type surfacique.

Dans un deuxième mode de réalisation, représenté à la figure 2, le module de filtration 40 est de forme cylindrique et comporte un tampon 41 de forme cylindrique en tricot métallique d'épaisseur comprise entre quelques mm et quelques centimètres, de préférence entre 2 mm et 150 mm, remplissant la fonction d'élément filtrant volumique, enserré entre deux parois cylindriques poreuses 42, 43 en matériau métallique fritté d'épaisseur comprise de préférence entre 0,2 mm et 3 mm remplissant la fonction d'éléments filtrants surfaciques.

A ses extrémités, le module de filtration 41 comporte deux tranches 44 et 45. Lorsqu'un tel module de filtration est utilisé pour filtrer un gaz, une tranche 45 est obstruée, le gaz pénètre à l'intérieur de l'élément filtrant par la tranche 44, circule à travers le tampon 41 en tricot métallique puis traverse perpendiculairement les parois 42 et 43 en matériau métallique fritté, comme l'indique les flèches. Le passage du gaz à travers le tampon 41 en tricot métallique assure un filtrage du type volumique et le passage du gaz à travers les parois 42 et 43 assure un filtrage du type surfacique.

Dans ces deux modes de réalisation, le tampon en tricot métallique 30, 41 est constitué d'un tricot de fils métalliques en acier inoxydable ou en alliage base nickel, de préférence en acier de type Class II B pour les éléments chauffants, suivant la norme américaine ASTM B 603 dopé au cérium (20% Cr - 5% Al dopé au cérium) mais, des aciers du type suivant, désignés selon les normes américaines ASTM A276-94B et A580/A580M-94, peuvent également être utilisés : UNS type 309, 310, 314 et 446, ainsi que AISI type 330, 439 et 442. De préférence, le diamètre des fils est compris entre 80 µm pour être suffisamment résistant, et 400 µm pour ne pas être trop rigide.

Le tampon en tricot est compacté puis les mailles du tricot sont solidarisées en leurs points de contact par soudage à l'aide d'une ou plusieurs décharges électriques intenses, pour obtenir une densité apparente comprise entre 2% et 50% de la densité du métal dont est constitué le tricot.

Le tricot peut être constitué d'un ou plusieurs fils tricotés ensemble, et de préférence de 2 à 4 fils. A dimensions identiques, l'efficacité du tampon pour retenir les particules de suie et la perte de charge qu'engendre son utilisation est fonction du nombre de fils, du diamètre des fils et de la densité apparente. A densité apparente égale, il est préférable que le nombre de fils soit faible (deux ou trois plutôt que six) et que le diamètre des fils soit relativement important (200 µm plutôt que 40 ou 80 µm).

Afin de faciliter la régénération du filtre par combustion des particules retenues, le ou les fils dont est constitué le tampon, comportent un dépôt catalytique constitué, par exemple, de métaux précieux tels que le platine ou le rhodium.

Les plaques poreuses 31, 32 ou les parois cylindriques poreuses 42, 43 en matériau métallique fritté qui constituent les éléments filtrants surfaciques, sont par exemple en acier inoxydable 316 L , ou plus généralement dans les mêmes aciers ou alliages que ceux qui ont été indiqués précédemment pour la fabrication de tampons tricotés. La porosité est choisie afin d'obtenir un ratio de filtration absolu compris, de préférence, entre 20µm et 60µm mesuré selon la norme ISO 4572. La paroi en matériau métallique fritté, qui est très peu résistante, peut, éventuellement, être recouverte sur une ou deux faces d'une toile métallique qui forme une armature.

Dans un troisième mode de réalisation, le module de filtration 17 de forme cylindrique creux comporte un élément filtrant volumique 21 constitué d'un premier tampon en tricot métallique 5 autour duquel est disposé un deuxième tampon en feutre métallique ou en feutre céramique 6, également en forme de manchon cylindrique. L'élément filtrant volumique 21 est entouré d'un élément filtrant surfacique 7 formant une paroi cylindrique. Il est constitué d'un matériau métallique fritté comme dans les modes de réalisation précédents.

Le tampon en tricot métallique 5 est constitué d'un tricot de fils métalliques en acier inoxydable ou en alliage base nickel comme dans les deux modes de réalisation précédents. Le tricot est réalisé soit directement sous forme de manchon, soit sous forme de bande enroulée sur un mandrin pour former un manchon généralement cylindrique comportant une partie axiale creuse 22. Le manchon est compacté dans la direction axiale puis les mailles du tricot sont solidarisées en leurs points de contact par soudage, le soudage étant engendré par une ou plusieurs décharges électriques intenses. On obtient ainsi un tampon en forme de manchon dont la densité apparente est comprise entre 2% et 50% de la densité du métal dont est constitué le tricot. Le tricot peut être constitué d'un ou plusieurs fils tricotés ensemble, et de préférence de 2 à 4 fils. Afin de faciliter la régénération du filtre par combustion des particules retenues, le ou les fils dont est constitué le manchon, comportent un dépôt catalytique en métal précieux.

Le tampon en feutre métallique ou céramique est constitué de fibres dont le diamètre est compris entre 8 et 30 µm et a pour effet d'augmenter la quantité de suies retenues par le tricot et par conséquent de retarder la saturation de l'élément filtrant surfacique. Il a une épaisseur de 2 à 10 mm.

L'élément filtrant volumique 21 a un diamètre extérieur de quelques centimètres, compris, de préférence, entre 1,5 et 4 fois le diamètre du trou cylindrique axial 22 du manchon. Il est à noter que, si le tampon en tricot métallique 5 est indispensable, le tampon en feutre 6 n'est qu'optionnel.

Lorsqu'un tel élément filtrant est monté dans un filtre, le gaz à épurer arrive par le trou axial 22, puis traverse le manchon 21 par circulation radiale avant de traverser la paroi 7 en matériau métallique poreux avant d'être évacué à l'extérieur de l'élément filtrant, comme l'indiquent les flèches.

Les différents éléments filtrants qui viennent d'être décrits peuvent être utilisés dans des filtres pour gaz d'échappement de moteurs diesel.

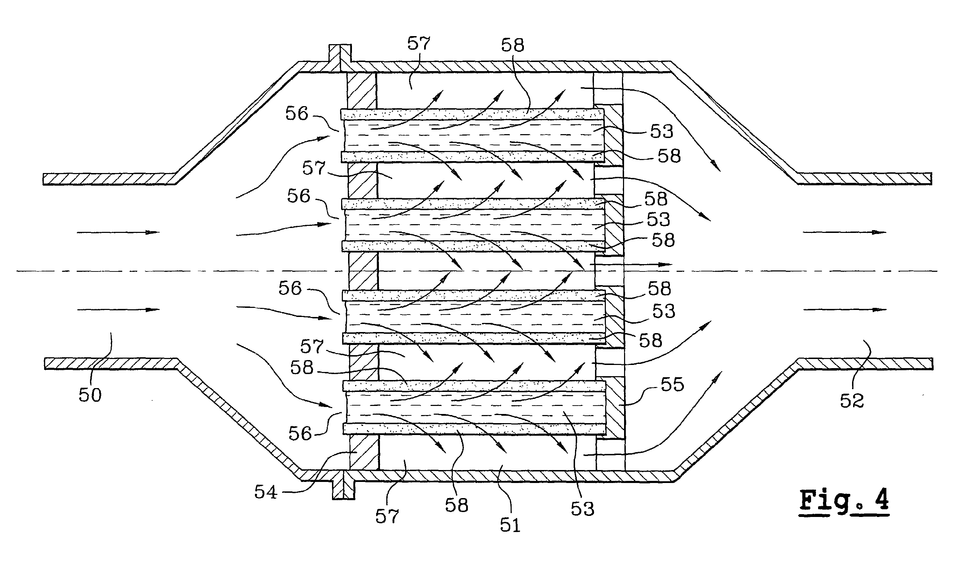

Dans un premier mode de réalisation d'un filtre représenté à la figure 4, le filtre comprend une conduite 50 d'arrivée du gaz à épurer, une enceinte de filtration 51 et une conduite 52 d'évacuation du gaz épuré, disposés dans cet ordre en suivant le sens de circulation du gaz.

Une pluralité de modules de filtration 53 du type du module de filtration plan, correspondant au premier mode de réalisation d'un module de filtration selon l'invention, est disposés en parallèle dans l'enceinte de filtration 51 de telle sorte que les parois de ces modules de filtration soient disposées parallèlement à l'axe du filtre. Ces modules de filtration 53 sont maintenus par un emporte filtre amont 54 et un emporte filtre aval 55. L'emporte filtre amont 54 obstrue les espaces 57 entre les module de filtration 53 du côté amont de telle sorte que le gaz à épurer qui arrive par la conduite 50 d'arrivée du gaz ne puisse passer que par les tranches 56 des module de filtration 53. L'emporte filtre aval 55 obstrue les tranches des modules de filtration 53 du côté aval et laisse libre le passage des espaces 57 entre les modules de filtration 53 et la conduite d'évacuation du gaz 52. Avec cette disposition, le gaz qui a pénétré par la tranche des modules de filtration 53 ne peut s'évacuer qu'en traversant les parois poreuses 58 des éléments de filtration. Un tel filtre est très compact.

Un filtre du type qui vient d'être décrit peut également être réalisé en utilisant des modules de filtration cylindriques conformes au deuxième mode de réalisation du module de filtration selon l'invention. Dans ce cas, on utilise une pluralité de modules de filtration de diamètres différents pouvant s'emboîter les uns dans les autres avec des jeux suffisants pour laisser libres des espaces permettant au gaz de s'évacuer.

Enfin, de tels filtres ayant une structure en nid d'abeille peuvent être réalisés par exemple en utilisant des modules de filtration de section hexagonale.

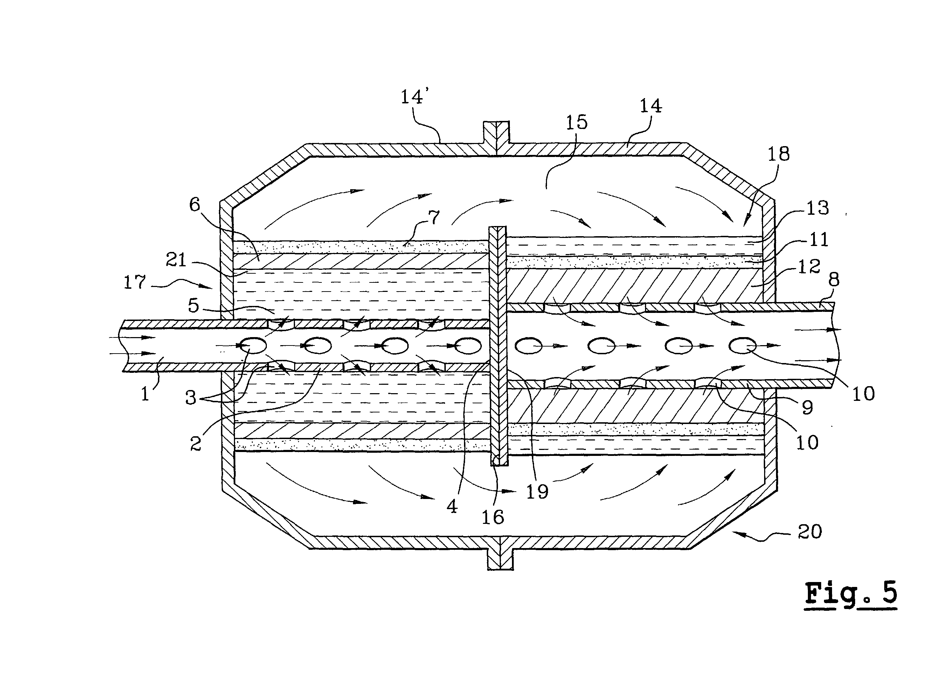

Dans un deuxième mode de réalisation de filtre représenté à la figure 5, le filtre est constitué d'une enceinte, repérée généralement par 20, en deux parties 14 et 14' pouvant être séparées, dans la quelle pénètre une conduite d'arrivée de gaz chargé en particules solides 1 et de laquelle ressort une conduite d'évacuation du gaz 8, les deux conduites 1 et 8 étant disposées dans le prolongement l'une de l'autre. La conduite d'arrivée de gaz chargé en particules solides 1 est constituée d'un tube dont la partie terminale 2, située à l'intérieur de l'enceinte 20, est percée d'une pluralité de trous 3 et dont l'extrémité 4 est obturée par une plaque amovible16 en forme de disque. La conduite d'évacuation du gaz 8 est constituée d'un tube dont la partie terminale 9, située à l'intérieur de l'enceinte 20, est percée d'une pluralité de trous 10 et dont l'extrémité 19 vient est obturée par une plaque amovible 16' en forme de disque. La partie terminale 2 du tube constituant la conduite d'arrivée du gaz chargé en particules solides 1 est emmanchée dans la partie centrale d'un module de filtration 17 en forme de manchon cylindrique conforme au troisième mode de réalisation de module de filtration décrit ci-dessus. La partie terminale 9 du tube constituant la conduite d'évacuation de gaz 8 est emmanchée dans la partie centrale d'un moyen 18 en forme de manchon cylindrique dont la fonction est de créer une perte de charge du gaz. Le moyen 18 et le module de filtration 17 sont disposés dans le prolongement l'un de l'autre et sont séparés par la plaque 16. Le diamètre de l'enceinte 20 est suffisant pour ménager un espace libre 15 entourant l'élément 17 et le moyen 18.

Avec cette disposition, le gaz arrivant par la conduite d'arrivée de gaz chargé en particules solides 1 s'écoule d'abord dans le sens radial, de l'intérieur vers l'extérieur, à travers le module de filtration 17 pour déboucher dans l'espace libre 15 puis dans le sens radial, de l'extérieur vers l'intérieur, à travers le moyen 18 pour être évacué par la conduite d'évacuation du gaz 8. De ce fait, le moyen 18 est un moyen pour créer une perte de charge du gaz entre l'espace libre 15 et la conduite d'évacuation du gaz 8.

Le moyen 18 pour engendrer une perte de charge du gaz entre l'espace libre 15 et la conduite d'évacuation du gaz 8 est constituée d'un manchon cylindrique comprenant essentiellement une paroi cylindrique en matériau métallique fritté 11 ayant pour fonction principale d'engendrer la perte de charge et, de façon secondaire, d'assurer un filtrage surfacique complémentaire. La paroi cylindrique en matériau métallique fritté s'appui sur un support perméable au gaz constitué, par exemple, d'un manchon cylindrique en tricot métallique de même nature que les tricots métalliques décrits précédemment, intercalé entre la paroi cylindrique 11 et le tube percé de trous constituant la partie terminale 9 de la conduite d'évacuation des gaz 8. Ce support perméable au gaz peut être constitué partiellement d'un catalyseur constitué par exemple d'un tricot métallique identique au précédent et sur lequel est déposé en catalyseur par exemple en métal précieux. Un manchon cylindrique 13 en tricot métallique est disposé à la périphérie extérieure de la paroi cylindrique 11 de façon à réaliser un filtrage volumique complémentaire du gaz avant que celui-ci traverse la paroi cylindrique 11.

Le matériau métallique fritté dont est constituée la paroi cylindrique 11 a une porosité choisie de façon à avoir un ratio de filtration absolu compris, de préférence, entre 3µm et 60µm.

L'espace libre 15 constitue une chambre de détente permettant au gaz de circuler.

Le moyen 18 pour engendrer une perte de charge du gaz entre l'espace libre 15 et la conduite d'évacuation du gaz 8, est principalement nécessaire pour éviter que le filtre surfacique 7 ne se rompe sous la pression du gaz. Cependant, pour obtenir un bon fonctionnement du filtre, il est souhaitable que le moyen 18 pour engendrer une perte de charge exerce également une fonction de filtration. Dans le cas particulier de l'utilisation pour le filtrage des gaz d'échappement d'un moteur diesel, la quantité de particules retenues par le filtre surfacique 7 doit être comprise entre 0,9 et 4 fois la quantité de particules retenues par le moyen 18 pour engendrer une perte de charge du gaz.

Dans le filtre qui vient d'être décrit, les éléments filtrants et le moyen pour engendrer une perte de charge sont tous les deux en forme de manchon cylindrique et le gaz s'écoule à travers eux dans le sens radial. Mais il faut comprendre que ces éléments peuvent avoir une forme quelconque, pourvu que le filtre comporte, dans l'ordre en suivant le sens d'écoulement du gaz, un élément filtrant volumique, un élément filtrant surfacique, un espace libre et un moyen pour engendrer une perte de charge du gaz.

Dans tous les modes de réalisation, le filtre comporte au moins un élément filtrant volumique et au moins un élément filtrant surfacique disposés de telle sorte que le gaz traverse le ou les éléments filtrants volumiques avant de traverser le ou les éléments filtrants surfaciques. Dans tous les modes de réalisation, les caractéristiques du filtre peuvent être ajustées pour chaque application notamment en choisissant de façon adaptée les dimensions des éléments filtrants, ainsi que leur densité ou leur porosité, et, le cas échéant, leur nombre.

Ces filtres sont particulièrement adaptés à la rétention des suies contenues dans le gaz d'échappement d'un moteur diesel.

## Revendications

1. Module de filtration (17, 29, 40) pour la rétention de particules solides contenues dans un gaz chargé en particules solides **caractérisé en ce qu'**il comporte au moins un élément filtrant surfacique (7, 31, 32, 42, 43) et au moins un élément filtrant volumique (21, 30, 41) constitué au moins d'un tampon en tricot métallique.

2. Module de filtration (17, 29, 40) selon la revendication 1 **caractérisé en ce que** au moins un tampon en tricot métallique dont est constitué l'élément filtrant volumique (21, 30, 41) comporte un dépôt catalytique.

3. Module de filtration (17) selon la revendication 1 ou la revendication 2 **caractérisé en ce que** l'élément filtrant volumique (21) comporte en outre un tampon (6) en feutre métallique ou céramique disposé entre le tampon (5) en tricot métallique et l'élément filtrant surfacique (7).

4. Module de filtration (17, 29, 40) selon l'une quelconque des revendications 1 à 3 **caractérisé en ce que** l'au moins un élément filtrant surfacique (7, 31, 32, 42, 43) est constitué d'une feuille ou d'une paroi en matériau métallique fritté.

5. Module de filtration (17, 29, 40) selon l'une quelconque des revendications 1 à 4 **caractérisé en ce que** l'élément filtrant volumique (30, 41) est enserré entre deux éléments filtrants surfaciques (31, 32, 42, 43).

6. Module de filtration (29) selon la revendication 5 **caractérisé en ce qu'**il constitue une plaque.

7. Module de filtration (40) selon la revendication 5 **caractérisé en ce qu'**il constitue un tube cylindrique.

8. Module de filtration (17) selon l'une quelconque des revendications 1 à 4 **caractérisé en ce que** l'élément filtrant volumique (21) est en forme de manchon cylindrique creux et **en ce que** l'élément filtrant surfacique (7) constitué une paroi cylindrique entourant l'élément filtrant volumique (21).

9. Filtre pour la rétention de particules solides contenues dans un gaz, du type comprenant une conduite (1, 50) d'arrivée de gaz chargé en particules solides, une enceinte de filtration (20, 51) contenant au moins un module de filtration (17, 53) et une conduite (8, 52) d'évacuation du gaz épuré **caractérisé en ce que** l'au moins un module de filtration (17, 53) est conforme à l'une quelconque des revendications 1 à 8, et comporte au moins un élément filtrant volumique et un élément filtrant surfacique, et **en ce que** par rapport au sens d'écoulement des gaz, l'élément filtrant volumique est disposé en amont et l'élément filtrant surfacique est disposé en aval.

10. Filtre selon la revendication 9 **caractérisé en ce qu'**il comporte une pluralité de modules de filtration (53) selon l'une quelconque des revendications 6 à 8 disposés parallèlement les uns aux autres de telle sorte que le gaz à épurer pénètre dans les modules de filtration par la tranche (56) des modules de filtration et s'évacue par leurs surfaces (58).

11. Filtre selon la revendication 9 **caractérisé en ce qu'**il comporte un module de filtration (7) selon la revendication 8 et **en ce qu'**il comporte en outre en aval du module de filtration par rapport au sens de circulation des gaz un moyen (18) pour engendrer une perte de charge du gaz entre le module de filtration et la conduite d'évacuation des gaz.

12. Filtre selon la revendication 11 **caractérisé en ce que** le moyen (18) pour engendrer une perte de charge est constitué d'un espace libre (15) et au moins une paroi (11) en matériau métallique fritté en appui sur un support (12) perméable au gaz tel qu'un tampon en tricot métallique disposé en aval de la paroi (11) en matériau métallique fritté, et éventuellement un tampon (13) en tricot métallique disposé contre la paroi (11) en matériau métallique fritté en amont par rapport au sens de circulation du gaz.

13. Utilisation d'un filtre selon l'une quelconque des revendications 9 à 12 pour épurer les gaz d'échappement d'un moteur diesel.
